**Europäisches Patentamt**

**European Patent Office**

**Office européen des brevets**

(11) Numéro de publication : **0 334 730 B1**

(12)

# FASCICULE DE BREVET EUROPEEN

(45) Date de publication du fascicule du brevet :
**01.07.92 Bulletin 92/27**

(51) Int. Cl.$^5$ : **C22B 58/00,** C01G 15/00, C22B 3/00

(21) Numéro de dépôt : **89400750.9**

(22) Date de dépôt : **17.03.89**

(54) **Procédé d'extraction liquide-liquide de gallium à partir de solutions basiques aqueuses au moyen d'une phase organique.**

(30) Priorité : **25.03.88 CH 1155/88**

(43) Date de publication de la demande :
**27.09.89 Bulletin 89/39**

(45) Mention de la délivrance du brevet :
**01.07.92 Bulletin 92/27**

(84) Etats contractants désignés :
**DE ES FR GB IT**

(56) Documents cités :
**EP-A- 0 053 971
CA-A- 1 062 474
FR-A- 2 277 897**

(73) Titulaire : **RHONE-POULENC CHIMIE
25, quai Paul Doumer
F-92408 Courbevoie Cédex (FR)**

(72) Inventeur : **Altorfer, Alfred
Riedhalden 13
CH-8427 Freienstein (CH)**
Inventeur : **Wohler, Ernst
Blumenweg 2
CH-8472 Seuzach (CH)**
Inventeur : **Wynn, Nicholas Patrick
35 Wyland Avenue
Toronto Ontario (CA)**

(74) Mandataire : **Esson, Jean-Pierre et al
Rhône-Poulenc Interservices Service Brevets
Chimie 25, quai Paul Doumer
F-92408 Courbevoie Cedex (FR)**

EP 0 334 730 B1

## Description

L'invention concerne un procédé d'extraction liquide-liquide de gallium à partir de solutions basiques aqueuses, en particulier à partir de lessive d'aluminate de sodium provenant de la production d'alumine selon le procédé Bayer, au moyen d'une phase organique constituée d'hydroxyquinoléine substituée et d'un solvant organique, outre le gallium, le sodium et l'aluminium passant également dans la phase organique.

Selon le procédé Bayer connu, pour obtenir de l'oxyde d'aluminium à partir de minerais d'aluminium (Bauxites), on attaque ces derniers à la lessive de soude à une température et des pressions élevées. On fait précipiter l'hydroxyde d'aluminium contenu dans la lessive d'aluminate de sodium et on le calcine ensuite en $Al_2O_3$ (alumine).

Dans ce procédé, il se produit dans la lessive d'aluminate de sodium un enrichissement du gallium contenu dans la bauxite.

Lorsqu'on extrait le gallium le ladite lessive, on extrait, entre autres, des quantités relativement importantes de sodium. Les proportions varient considérablement. Elles dépendent, d'une part, de la composition de la lessive d'aluminate de sodium et, d'autre part, de la concentration et du type de l'hydroxyquinoléine substituée, du solvant organique et d'éventuels additifs.

Dans la phase organique, les rapports de concentration typiques sodium/aluminium/gallium sont 250/25/1.

Compte tenu de ces rapports, une perte de lessive de soude est constatée, nécessitant un ajout de lessive dans le procédé Bayer.

Dans les procédés connus, outre le gallium et l'aluminium, on extrait également le sodium à l'aide d'acides, ce qui, d'une part, nécessite des appareillages résistant à la corrosion et, d'autre part, une consommation élevée en acide.

A titre d'exemple, on trouve la description de tels procédés dans le brevet DE 25 30 880, le DE-OS 2743 475 et la demande EP 0 145 659.

Dans l'un de ces procédés, on extrait, dans une première phase, la solution chargée de solvant organique d'extraction à l'aide d'un acide fort faiblement concentré. Dans ce cas, on obtient comme sous-produit une solution acide contenant des sels de sodium et d'aluminium. On sépare cette solution de la phase organique. Ensuite, au cours d'une autre phase, on extrait la phase organique avec un acide concentré plus fort et on obtient comme produit intermédiaire une solution acide de sel de gallium contenant de faibles quantités de sels de sodium et d'aluminium.

Dans un autre procédé connu, on extrait, dans une première phase, le sodium et l'aluminium contenus dans la solution d'agent d'extraction organique chargé à l'aide d'acide chlorhydrique de concentration relativement élevée, le gallium, par complexation restant dans la phase organique. Après la séparation de l'acide chargé de sels, on extrait dans une deuxième phase, le gallium contenu dans la phase organique par un acide chlorhydrique relativement dilué. On sépare la solution de chlorure de gallium de la phase organique sous forme de produit intermédiaire.

Enfin, selon un troisième rpocédé connu, on extrait, en une seule phase et simultanément, le gallium, le sodium et l'aluminium contenus dans la solution d'agent d'extraction organique chargée, par un acide fort. On obtient alors comme produit intermédiaire une solution acide contenant des sels de gallium, de sodium et d'aluminium.

Dans tous les procédés cités, on peut purifier le produit intermédiaire d'une manière connue en soi et obtenir le gallium.

Ainsi, à titre d'exemple le brevet européen 53971 décrit un procédé de purification d'une solution de chlorure de gallium par échange avec une phase organique contenant un alcool pour faire passer le gallium dans la phase organique. Les impuretés coextraites avec le gallium sont réextraites de la phase organique par échange avec une solution acide, le gallium étant lui réextrait par échange avec l'eau.

L'invention est fondée sur le problème suivant, à savoir simplifier et rentabiliser les procédés connus.

Selon l'invention, on résout ce problème au moyen des opérations indiquées dans la caractéristique de la revendication 1.

Il est apparu de façon surprenante dans l'invention que l'on peut séparer sélectivement le sodium par simple lavage à l'eau.

Contrairement aux procédés connus, ce lavage ne se fait pas à l'aide d'un milieu fortement corrosif. Il en résulte que les équipements nécessaires au procédé de lavage ne doivent pas être réalisés obligatoirement dans un matériau résistant aux acides.

L'une des réalisations avantageuses de l'invention consiste à laver avec peu d'eau, éventuellement à contre-courant, de façon à ce que la lessive de soude obtenue ait une concentration suffisante pour pouvoir être recyclée dans le procédé Bayer.

Compte tenu de la séparation du sodium par lavage au cours d'une première phase, c'est-à-dire à la suite de l'extraction de la solution d'aluminate de sodium à l'aide de l'agent d'extraction organique indiqué, les débits dans les phases suivantes sont moins importants ce qui entraine la mise en oeuvre d'un appareillage moins volumineux.

Selon les conditions du procédé, on observe également une nette réduction de la consommation d'acide jusqu'à l'obtention du produit intermédiaire.

Dans le cas où, après avoir isolé le gallium, on ne parvient pas à neutraliser l'acide à l'aide des eaux résiduaires alcalines du procédé Bayer, il faut encore ou bien mettre en oeuvre des quantités considérables de produits de neutralisation selon l'acide obtenu, ou bien prévoir une unité de récupération de l'acide.

**Revendications**

1. Procédé d'extraction liquide-liquide de gallium à partir de solutions basiques aqueuses, en particulier à partir de lessive d'aluminate de sodium provenant de la production d'aluminium selon le procédé Bayer, à l'aide d'une phase organique constituée d'hydroxyquinoléine substituée et d'un solvant organique, le sodium et l'aluminium, outre le gallium, passant également dans la phase organique, caractérisé en ce que, avant de procéder aux phases suivantes de l'extraction et de séparation permettant d'obtenir le gallium, on met, dans une première phase de lavage, la phase organique chargée de gallium, de sodium et d'aluminium en contact avec de l'eau, la majeure partie du sodium se transformant en lessive de soude que l'on sépare ensuite de la phase organique.

2. Procédé selon la revendication 1 avec mise en oeuvre d'une solution d'aluminate de sodium provenant du procédé Bayer, caractérisé en ce que l'on recycle la lessive de soude dans le procédé Bayer.

**Patentansprüche**

1. Verfahren zur flüssig-flüssig Extraktion von Gallium aus wäßrigen, basischen Lösungen, insbesondere aus Natriumaluminatlauge des Bayer-Verfahrens zur Herstellung von Aluminium, mit Hilfe einer organischen Phase aus substituiertem Hydroxychinolin und einem organischen Lösungsmittel, wobei außer Gallium auch Natrium und Aluminium in die organische Phase übergehen, dadurch gekennzeichnet, daß man vor Durchführung der nachfolgenden Schritte Extraktion und Trennung, mit denen das Gallium erhalten wird, in einer ersten Waschstufe die mit Gallium, Natrium und Aluminium beladene organische Phase mit Wasser in Kontakt bringt, wobei sich der größere Teil des Natriums zu Natronlauge umsetzt, die man dann von der organischen Phase trennt.

2. Verfahren nach Anspruch 1, mit der Verwendung einer Natriumaluminatlösung des Bayer-Verfahrens, dadurch gekennzeichnet, daß man die Natronlauge in das Bayer-Verfahren zurückführt.

**Claims**

1. Process for liquid-liquid extraction of gallium from aqueous basic solutions, in particular from sodium aluminate lye originating from the production of aluminium by the Bayer process, with the aid of an organic phase consisting of substituted hydroxyquinoline and an organic solvent, the sodium and the aluminium, besides the gallium, also moving into the organic phase, characterised in that, before proceeding to the following stages of extraction and separating enabling the gallium to be obtained, the organic phase carrying gallium, sodium and aluminium is, in a first washing stage, placed in contact with water, most of the sodium being converted into soda lye which is then separated from the organic phase.

2. Process according to Claim 1, with the use of a sodium aluminate solution originating from the Bayer process, characterised in that the soda lye is recycled into the Bayer process.